# EUROPEAN PATENT SPECIFICATION

(11) **EP 2 944 683 B1**
(45) Date of publication and mention of the grant of the patent: **12.07.2023**
(21) Application number: 14187154.1
(22) Date of filing: 30.09.2014
(51) Int. Cl.: C11B 1/12, C11B 3/00, C11B 3/04, C11B 5/00

(54) **Feed supplement for the formulation of feeds destined to aquatic organisms, especially fishes and crustaceans under industrial cultivation**
Futterzusatz zur Formulierung von Futtermitteln für Wasserorganismen, insbesondere Fische und Schalentiere unter industrieller Kultivierung
Complément alimentaire pour la formulation d'aliments destinés à des organismes aquatiques, en particulier les poissons et les crustacés dans la culture industrielle

(30) Priority: 15.05.2014 CL 2014001287
(43) Date of publication of application: 18.11.2015
(73) Proprietor: Trio S.A., 9260099 Santiago (CL)
(72) Inventor: Luque Camino, Ana Francisca, 9260099 Santiago (CL); Perez Rodriguez, Victor Alberto, 9260099 Santiago (CL)
(74) Representative: Cabinet Laurent & Charras

(56) References cited:
- WO-A1-2006/052974
- CA-A1- 2 335 745
- US-A1- 2012 040 076
- US-A1- 2012 076 914
- US-B2- 7 771 752

## Description

### FIELD OF THE INVENTION

The present invention relates to the animal feeding area, especially to the process to produce food supplements and supplements processed. Such supplements are destined to feeding in the aquaculture industry. More in particular, the present invention is addressed to the process and production of food supplements used in the oiling of pellets along with the oil incorporated to concentrated feeds used in fish farming.

According to the present invention, food supplements are a product with high energetic value, prepared with free fatty acids and triglycerides of vegetal, marine origin, antioxidants and other additives.

### BACKGROUND OF THE INVENTION

Among the main organic constituents of living organisms, lipids and proteins can be found in addition to carbohydrates and minerals.

In the particular case of marine organisms, unlike terrestrial animals that developed an efficient system to use carbohydrates, fishes and crustaceans meet their requirements of carbohydrates by the catabolism of amino acids; therefore, for the efficient growth of these species high energy diets are required. This is why diets high in lipids are essential in the aquaculture industry in order to improve the rates of growth, the use of feeds, retention of nutrients and pigments in fishes and crustaceans, especially in carnivorous species.

Lipids are obtained from vegetal and marine sources. At present, the main source of lipids for feeding in aquaculture is the fish oil, but with the disadvantage that it is a limited source of increasing and changing market price and also having an impact on the price of vegetal oils used as complement and substitute in this industry.

The type of lipid, quantity and quality of them directly affect the welfare of the aquatic organisms being cultures and on the quality of the final product. The usual quantity of lipids in foodstuffs for fishes ranges between 20 and 38% in weight. The highest content of lipids is desirable, so that to reduce the protein digestion as source of energy, but there is a side effect in diets high in fat that can result in the formation of fatty deposits in the animal tissue, especially in viscera and such organs as liver. This means that in diets high in fat, the following problems are noted: fatty liver, adiposity and detrimental effects on homeostasis and growth of animals. Therefore, current diets for aquatic organisms, especially fishes and crustaceans, maximize the content of fat, with the restriction of reducing undesired side effects that harm the health of the animals and of the by-products obtained from them.

Lipids can be divided in simple and complex groups, which, considering the products obtained from them, can be grouped in the following categories: fatty acids, glycerolipids, glycerophospholipids, sphingolipids, sterols, prenols, saccharolipids and polyketides.

In particular, the free fatty acids derived from triglycerides (oils and fats) represent the main source of aerobic fuel for the energetic metabolism of the fish muscle.

Lipids are essential components of all cellular and sub-cellular membranes, serving as biological vehicle in the absorption of liposoluble vitamins A, D, E and K; they are a source of essential fatty acids, also being indispensable for the maintenance and integrity of cells membranes.

They are a source of essential steroids with a wide range of important biologic functions (e.g. cholesterol is involved in the maintenance of membrane systems, in the lipid transport and as precursor of vitamin D3, bile acid and steroid hormones, androgens, estrogens, adrenal hormones and corticosteroids).

### Food Supplements

Food supplements are substances that are added to diets or to the ingredients of diets, whether:
- To preserve the nutritional characteristics of the foodstuff before feeding (e.g. antioxidants) or
- To facilitate the dispersion of ingredients, pelletizing or granulation of feeds (e.g. emulsifiers, stabilizers and binders), or
- To facilitate the growth (e.g. growth regulators), or
- To facilitate the intake of feeds and the acceptance of the product by the consumer, or
- To provide the essential nutrients in a purified form and in known quantities (e.g. vitamins, minerals).

From the point of view of the food technology, lipids operate as lubricant, helping to the passage of food through the pelletizing machine's dial. In addition, they help to reducing dust in foodstuffs and play an important role in the palatability of feed.

In vegetables, the energy is stored in the form of starch, while in animals it is in the form of glycogen, but both in vegetables and animals it may be also stored in a more compact way as fats or oils. In vegetables, fats or oils are formed from carbohydrates. In animals, fats may be also formed from carbohydrates. However, unlike vegetables, animals may also accumulate fat in their bodies from the fat eaten. The single difference between fats and oils is that the latter present in liquid condition at room temperature, while fats are semisolid.

Fats and oils are normally found in food materials and in fat deposits of most animals in the form of triglycerides, which are esters of fatty acids and glycerol.

Since the animals do not have the metabolic capacity to perform de novo synthesis essential fatty acids of the n-6 and n-3 series, said fatty acids shall be incorporated in an already processed way to diet.

The most abundant fatty acids in the tissues of fish and crustaceans, both for freshwater and marine species, belong to the linolenic series (n-3), while the fatty acids of the n-6 series are present at a lower concentration. In fact, it is thought that the dietetic (preferred) requirement of fishes under the n-3 series of essential fatty acids over the n-6 series is mainly due to the low temperature of their aquatic environment (compared with mammals), and the lower the temperature the greater the incorporation of fatty acids to the tissue in the n-3 series.

In general, the oils from fishes, shrimps and mollusks are sources rich in essential fatty acids from n-3 series. Examples of oils, which content in EPA and DHA fatty acids accounts for over 20% of the total fatty acids, include cod liver oil, sardine oil, skipjack oil, shrimp head oil and squid liver oil.

On the contrary, the vegetal origin oil are rich in 18:2 n-6 fatty acids and they contain very little or nothing of essential fatty acids of the n-3 series (except for soybean or rapeseed oil and in particular flax oil, which content of 18:3 n-3 fatty acids can exceed 8, 7 and 56%, respectively, in relation to the total fatty acids present). Examples of vegetal oil which content of 18:2 n-6 fatty acids account for 50% or more of the total fatty acids present include cottonseed oil, corn oil, sunflower seed oil and soybean oil, among others.

When the farming density of crustaceans or fishes, as well as the requirements of production, is such that the productivity of the water body by itself cannot support or does not properly support the growth of animals, then an exogenous supplementary diet is necessary that can be offered directly as a supplementary resource of nutrients for cultivation. In this system, the dietetic requirements of the organisms under cultivation are met by the combination of feed and food supplement. Supplementary foods normally consist in animal or vegetal by-products and they may involve the use of one single product fresh or not processed (i.e. wastes from mills or breweries or rice husks) or the use of a combination of different materials in the form of mixtures or processed as pellet. Even when supplementary foods are used as a direct resource of nutrients for the species under cultivation, when these products are excessively used, there is also a fertilization effect on the water body. Under this feeding strategy, it is possible to have high densities of load in the tank and consequently to obtain high productions per unit of area.

Another feeding strategy is with full diets, which involves the external provision of a nutritionally high-quality full foodstuff with a preset profile of nutrients. Traditionally, balanced diets are provided in the form of dry or wet pellet consisting in the combination of different ingredients, which content of total nutrients is similar to the dietetic requirements known for the fishes and crustaceans in question under condition of maximum growth. Alternatively, balanced diets may consist in just one type of food of high nutritional value or a combination of both. Due to the high densities of sowing of fishes/crustaceans generally used with this feeding strategy, it is assumed that the natural productivity of the tank does not provide any benefit to this kind of cultivation. This feeding strategy is typical of intensive cultivation systems.

There are patent documents that describe food supplements rich in EPA, DHA, DPA, Omega-6, etc. and its use as supplement in human and animal feeding.

For animal feeding, not refined fatty acids are used containing products of primary and secondary oxidation, such as peroxides, horoperoxides, aldehydes and ketones, so that their content in supplements for animal feeding commercially available is limited to a maximum of 3% of free fatty acids (acidity). Secondary oxidation compounds are considered anti-nutritional or toxic, because they intervene in the metabolism of organisms in a negative way and, therefore, they should be ideally minimized or not be present in feeds or feeding supplements for animals.

There are publications of patent applications in the state of the art, such as publication WO0049889 "ANIMAL FEED SUPPLEMENT FOR THE NUTRITIONAL ENRICHMENT OF ANIMAL PRODUCE" describing an animal feeding supplement that includes fish meal as a source of long chain omega 3 fatty acids to be included in the diet of such animals, where the content of fatty acids to maximize the nutritional value of the feed without impairing the product. The product described in this document does not explicitly incorporate material of vegetal origin and the percentage of oil used is 1% by weight of the total supplement processed. The process does not consider refining stages for the product.

US 2012/076914 A1 relates to a liquid dietary supplement for animals comprising a carrier liquid including fish oil and a plant-based thickening agent.

US 2012/040076 A1 relate to an aquaculture feed composition of marine origin and optionally of biomass origin.

US 7 771 752 B2 relates to an animal feed supplement comprising tuna meal and other components such as a naturally-occurring antioxidant.

CA 2 335 745 A1 relates to a process for preparation of nutritionally upgraded canola meal and high value canola oil from canola seed for use i.e. in fish diets.BRIEF

### DESCRIPTION OF FIGURES

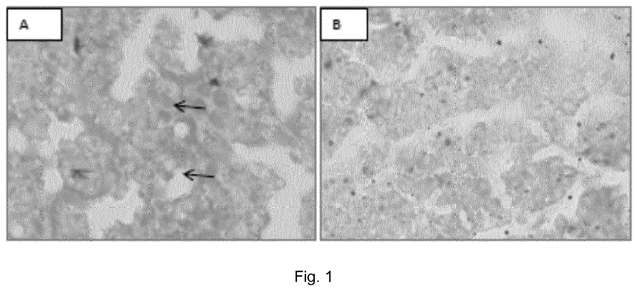

Figure 1: Staining with Oil-Red-O of the lipid drops in the liver (20x increase, light microscopy). Figure A shows the liver of a fish fed with the control diet (0% of supplement obtained by the process of the present invention), while Figure B shoes the liver of a fish fed 40% of supplement obtained by the process of the present invention. The lipid drops are stained with a darker red color (arrows) than the background tissue. In Figure A greater and more abundant drops of lipids are seen compared with Figure B.

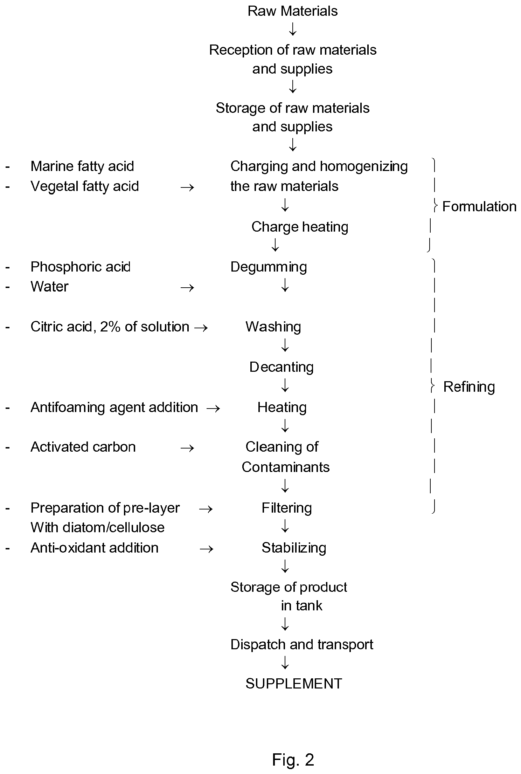

Figure 2: General diagram of the production process of the feed supplement obtained by the process of the present invention.

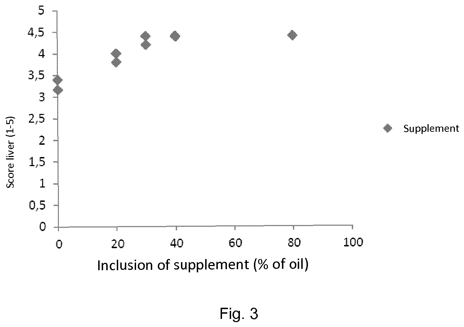

Figure 3: Effect on the liver (score) according to the inclusion level of the ifeed supplement obtained by the process of the present invention.

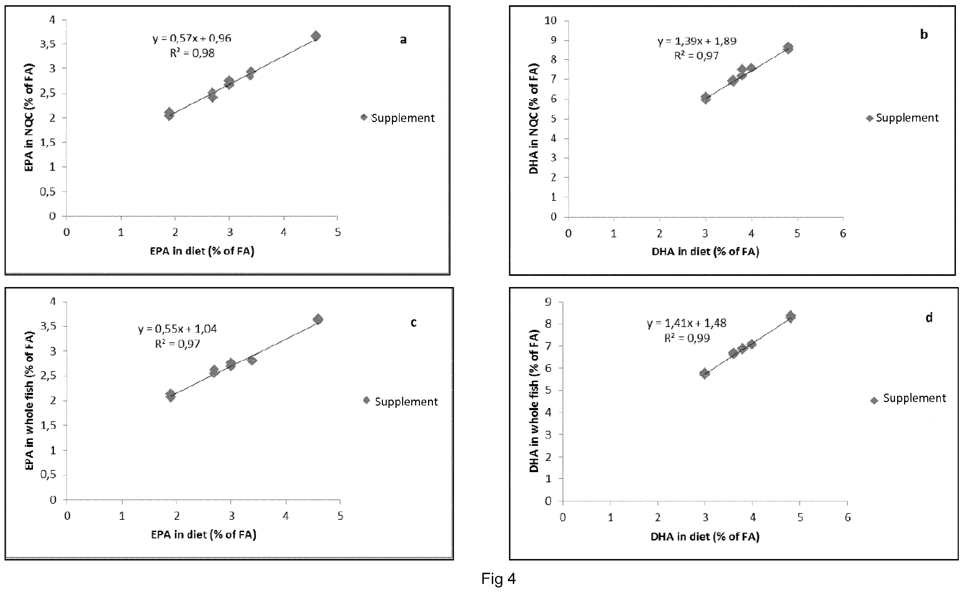

Figure 4: Ratio between EPA and DHA in the diet and in the muscle between EPA and DHA in the diet and the full body of salmons fed with different levels of inclusion of different formulae supplement obtained by the process of the present invention.

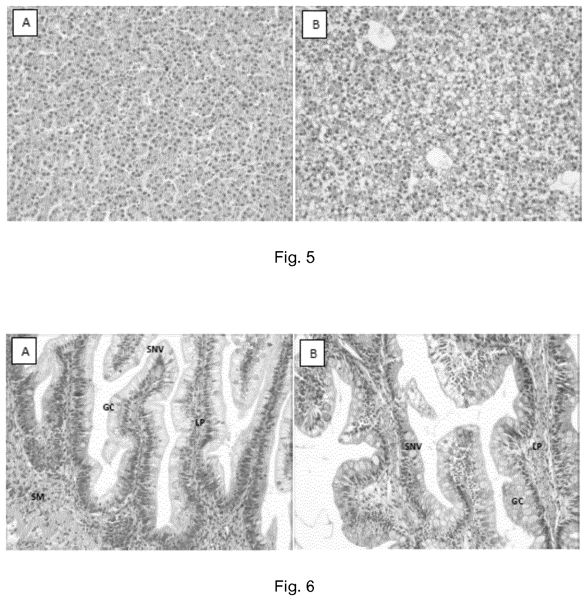

Figure 5: Liver stained with standard HE (20X, light microscopy). Figure A, diet with 20% inclusion of feed supplement obtained by the process of the present invention shows folds of the mucous with the size of supranuclear vacuoles (SNV) reduced and isolated presence of goblet cells (GC). Figure B shows a diffuse reduction of the SNV size, while the GCs are densely grouped in the case of control diet.
Figure 6: Intestinal villi (hindgut) stained with standard HE (20X, light microscopy). Figure A, diet with 20% inclusion of feed supplement obtained by the process of the present invention shows folds of the mucous with the size of supranuclear vacuoles (SNV) reduced and isolated presence of goblet cells (GC). Figure B shows a diffuse reduction of the SNV size, while the GCs are densely grouped in the case of control diet.

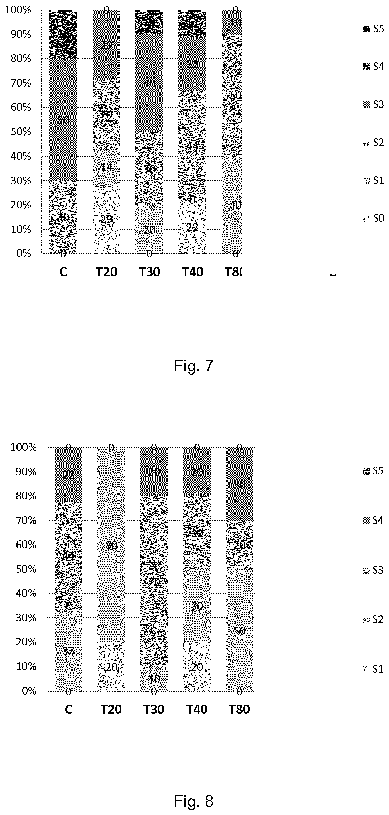

Figure 7: Frequency of injury lesions (%) in the liver (changes in fatty acids based on the scoring system (score) from 1 to 5) in the final sampling for the Atlantic salmon for control diet and diets with 20%, 30%, 40% and 80% (T20, T30, T40 and T80) of inclusion of the supplement according to the present invention.
Figure 8: Relative abundance of supranuclear vacuoles (SNV) in the intestine (based on the scoring system (score) from 1 to 5) in the final sampling for the Atlantic salmon for control diet and diets with 20%, 30%, 40% and 80% (T20, T30, T40 and T80) of inclusion of the supplement according to the present invention.

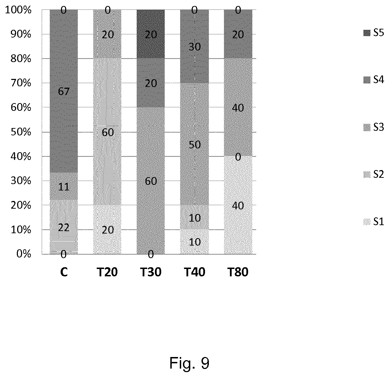

Figure 9: Relative abundance of goblets cells (GC) in the intestine (based on the scoring system (score) from 1 to 5) in the final sampling for the Atlantic salmon for control diet and diets with 20%, 30%, 40% and 80% (T20, T30, T40 and T80) of inclusion of the supplement according to the present invention.

### SUMMARY OF THE INVENTION

The present invention describes a process to obtain a feed supplement for fishes as claimed in claim 1. It describes a feed supplement for pellets that can be used in the industry of crustaceans and fish farming industry. It is a supplement with high energetic value and omega-3 essential fatty acids processed with refined fatty acids and vegetal-origin triglycerides in addition to antioxidants and other additives.

### DESCRIPTION OF THE INVENTION

The present invention describes a process to obtain a feed supplement for fishes and crustaceansaccording to claim 1. It also describes the product obtained allowing to preparing the feed supplements themselves. The product obtained by the process of the present invention corresponding to a feed supplement prepared with free fatty acids and triglycerides of vegetal and marine origin, emulsifiers and natural anti-oxidants rich in Omega-3 fatty acids, with the most relevant being EPA and DHA and developed to supplement essential fatty acids, anti-oxidants and healthy energy in concentrated feeds.

When incorporating to the diet of fishes and crustaceans, the feeding supplement obtained by the process of the present invention shows the following main advantages:
- Reduction of fatty liver
- Better absorption of free fatty acids
- Increased absorption of astaxantine, about 20% higher, and
- Increased concentration of DHA and EPA in the muscles and full body of fishes and crustaceans in proportion to the content of the feed supplement obtained according to the present invention.

The formulation of concentrated feeds with a balanced and recommended addition of the feed supplement obtained by the process of the present invention allows the final feed to facilitate the transport of liposoluble vitamins, showing such technical advantages as:
- Highly bioavailable energy
- Easily emulsionable
- Lower cost of the portion
- Excellent stability in mixing with vegetal and marine oils
- Easy management and dosing
- Free of dioxins and endosulfans
- Free of aldehydes, ketones and other products of primary and secondary oxidation.

In particular, the advantageous effect of the feed supplement obtained by the process of the present invention is the reduction of fatty liver, which is shown through chemical and histological analyses and also through visual evaluation, where it is possible to determine that in fishes fed with control diet (baseline diet) without using the feed supplement obtained by the process of the present invention, there is a high accumulation of hepatic lipids (Figure 1).

In addition, when using refined fatty acids, this is a product free of primary and secondary oxidation products, such as peroxides, hydroperoxides, aldehydes and ketones, so that using a higher percentage of free acids is possible, maximizing the energetic contribution of the product.

The use of the product obtained by the process of the present invention is recommended in the stage of oiling the pellet along with the total oil to be incorporated, being able to reach 80% of the oil or according to the indications of the nutritionist in charge.

The product obtained by the process of the present invention is composed of free refined fatty acids and triglycerides of vegetal origin (sunflower, canola) and marine origin (pelagic fishing), soybean lecithin, BHA/BHT/citric acid anti-oxidants and, optionally, glycerol or glycerin.

In an embodiment, the product contains a proportion by weight of up to 50% of free fatty acids and up to 50% of triglycerides.

The process of the present invention of claim 1 follows the general diagram for the stages of formulation and refining according to that presented in Figure 2 and made up of the following operations:
- Formulation:
   ∘ Charging and homogenizing the raw material
   ∘ Heating the homogenized raw material
- Refining:
   ∘ Degumming the mixture
   ∘ Washing the mixture
   ∘ Settling
   ∘ Drying
   ∘ Cleaning of contaminants
   ∘ Filtering
   ∘ Deodorizing, and
   ∘ Stabilizing and storing the product

The process is especially characterized, because refined fatty acids are obtained, where the separation stages allow obtaining a product free of primary and secondary oxidation compounds, such as aldehydes and ketones.

### RECEPTION, ANALYSIS AND STORAGE OF RAW MATERIALS

The production starts with the selection of raw materials corresponding to raw fatty acids (mixture of triglycerides and free fatty acids) of vegetal origin (such as, but not limited to, canola, sunflower, grape, palm), which are analyzed after their reception and stored in tanks destined for each type of fatty acids.

Raw materials must meet the minimum and maximum technical specifications, such as free acidity, anisidine value, thiobarbituric value, dioxins, PCBs established according to safety programs allowing the described process to adjusting to the parameters set for the quality guarantee of the feed supplement to be processed. Such specifications are defined according to:

| **Variable** | **Marine origin** | **Vegetal origin** |
|---|---|---|
| Free acidity, % | 20 min | 20 min |
| Humidity, % | 2,0 max | 2,0 max |
| Impurities, % | 2,0 max | 2,0 max |
| Rate of peroxides, Meq O2/Kg | 10 max | 10 max |
| Chromatographic profile | Characteristic of the origin of the fatty acid | |
| PCBs and dioxines | 24 EQB ng/kg max. | 24 EQB ng/kg max. |
| Mercury | 1 ppm max. | 1 ppm max. |
| Cadmium | 2 ppm max | 2 ppm max |
| Lead | 3 ppm max | 3 ppm max |
| Arsenic | 3 ppm max | 3 ppm max |

The storage of raw materials and supplies should be such that it may protect quality. To this, fatty materials should be mainly protected from contact with oxygen, humidity and light in order to keep their oxidative quality until the formulation of the product. The fatty materials shall be stored in closed tanks and in environment protected against oxygen. The rest of supplies will be stored in their original package at room temperature in a warehouse.

### FORMULATION STAGE

### Charging and homogenization:

Production starts by determining the proportions of fatty materials of vegetal and marine origin allowing to getting the required profile of fatty acids. The proportion to be used of each fatty material (vegetal and marine) is determined based on the baseline information on the content of: Omega-3 fatty acids: eicosapentaenoic acid (EPA) and docosahexaenoic acid (DHA); Omega-6 fatty acids: linoleic acid (C18:2) of the fatty materials and the minimum and maximum content of Omega-3 and Omega-6 fatty acids, respectively, guaranteed in the final product.

Once the proportion of each fatty material is determined, they are charged for its homogenization in a stainless steel reactor provided with stirring at 800-900 rpm and heating through the steam coil.

The reactor should have a cylindrical shape and be provided with a vertical axis. The reactor's upper part should be closed and have a condenser for gases during reaction. The reactor's bottom should be rounded or conical in order to eliminate steep corners or regions where the currents of fluids could not enter.

In this case, for the proper turbulence to be ensured, the charge height is about the same that the reactor's diameter. The reactor's stirring blades should be designed in such a way to allow the operations of suspension of solid particles, mixing of different fatty fractions, dispersion of the aqueous phase in fatty phase with the formation of suspending drops, and the proper transfer of heat between the fatty material and the steam coil.

### Heating:

The stirrer is preferably of the impeller type that generates currents in tangential or radial direction to the axis, i.e an impeller of radial flow. The charge should be brought to a temperature of 60-70°C under permanent stirring. This stage allows the mixture to being in proper condition of solubility for the later reactions and stages.

### REFINING

### Degumming:

Once the refining temperature has been reached, the degumming stage takes place by adding 0.5-1.0% of phosphoric acid in order to complex the so-called gums or phosphatides. Then, hot water is dosed over the fatty material by stirring. The quantity of water to be added depends on the percentage of phosphates present in the fatty material, but it should be of about 5%. Temperature keeps similar to the previous stage, between 60 and 70°C and under stirring between 800 and 900 rpm. Once the gums are hydrated (within about 30 minutes), stirring is stopped and the fatty material is left to rest. The heavy gum phase settles down by gravity to the bottom, thus the fatty material supernatant being evident. The fragments of gum are removed from the bottom of the tank's cone, brought to the storage of gum and separated from the aqueous phase.

### Washing:

The process of washing is carried out at 80°C at an aqueous solution of 2% citric acid under a proportion of 10% to the charge weight. This amount is enough to drag the possible inorganic material present until getting a free sulphuric acidity below 0.05% and complexing the possible heavy metals present in the fatty material.

### Centrifuging - decanting:

Then, the washing water should be separated through decanting or centrifuging method until getting humidity below 0.5%.

### Cleaning treatment with activated carbon:

For the elimination of possible traces of pesticides, benzopyrenes, dioxins or another contaminant, temperature is increased until 100-130°C under permanent stirring and in a hydrogen environment. Then, activated carbon is added of characteristic grain-size distribution with an absorption surface of at least 1000 - 1500 m² of fatty material, so that to ensure the full removal of such contaminants as pesticides, dioxins and PCBs. The activated carbon should be added in the form of slurry at a concentration of 10% by weight in order to ensure its full suspension in the fatty medium and in a sufficient quantity to reach a final concentration of 1 to 2%. The contact of the activated carbon should extend for a period not less than 90 minutes.

### Filtering:

Once cleaning ends, the product is filtered until the full removal of activated carbon. For the removal of particles of activated carbon charged with contaminated material, filtering should be performed in sleeve filters or of Niagara type with a mesh below 5 micra, so that to ensure the full removal of carbon particles. The filter should be properly conditioned with a pre-layer in order to get a mesh below 5 micra.

### Deodorizing:

This stage is necessary to ensure the final palatability of the final product and it is performed after filtering the product in high-vacuum deodorizing equipment between 0.1 and 0.5 bars at a temperature of 180 - 200°C for 45 to 60 minutes.

### STABILIZATION-STORAGE

### Stabilization:

The filtered product should be stabilized with a tested anti-oxidant, so that to get Rancimat not below 30 hours at a temperature of 80°C and a flow of air of 20 l/h. The anti-oxidant may be of the synthetic type BHT/BHA or natural of the mixing of tocopherols and it can be dosed between 500 and 2000 ppm until obtaining the desired rancimat.

### Storage:

The finished product should be stored in a closed tank at room temperature and protected against the air entering through a nitrogen atmosphere.

The process described above allows formulating a product composed of free fatty acids and refined triglycerides of marine and vegetal origin, free of primary and secondary oxidation compounds, free of heavy metals, dioxins, pesticides, PCBs, colorant and nitrofurans.

### EXAMPLES

Tests with Atlantic salmon with an initial weight of 0.3 kg were performed. The composition of the baseline diet (control diet) of fishes is shown in Table 1.

**Table 1: Composition of raw materials of baseline diet**

| **Composition** | **Percentage** |
|---|---|
| Fishmeal | 24.0 |
| Soybean protein concentrate | 18.0 |
| Poultry meal | 8.5 |
| Wheat gluten | 5.5 |
| Wheat meal | 10.0 |
| Corn gluten | 5.5 |
| Oil mixture | 22.4 |
| Vitamins | 2.0 |
| Minerals | 0.5 |
| Monosodium phosphate | 2.0 |
| Carophyll red10%-CWS | 0.05 |
| Itrium oxide | 0.01 |
| Methionine | 0.5 |
| Lysine HCl | 0.8 |
| Threonine | 0.2 |

Feed pellets were extruded and dried and the experimental diets consisted in adding different mixtures of oil (Table 2) to pellets. The oil cover corresponds to 22.4 % of the diet and to 82 % of lipids of the diet.

**Tabla 2: Composition of experimental diets**

| **% average cover** | **Diet 1** | **Diet 2** | **Diet 3** | **Diet 4** | **Diet 5** |
|---|---|---|---|---|---|
| Control oil | 100 | 80 | 70 | 60 | 20 |
| Supplement | 0 | 20 | 30 | 40 | 80 |
| **Total** | **100** | **100** | **100** | **100** | **100** |

### Example 1:

The content and profile of fatty acids in the fillet and whole body of the fish depended on the diet (Figure 3). The EPA and DHA content in the muscle and whole body linearly increased with the levels of inclusion of the nutritional supplement obtained by the process of the present invention. The proportions of EPA, DPA, DHA, the sum of n-3 fatty acids and saturated fatty acids significantly increased with the increase of levels of the nutritional supplement obtained by the process of the present invention; the composition of fatty acids in the muscle and the whole body reflected the content of the diet (Figure 4). The retention of the sum EPA+DHA was high both in the muscle (33-41%) and in the whole body (71-85%).

This, along with the lack of effects of the diet on the retention, suggests that the n-3 PUFA of the nutritional supplement obtained by the process of the present invention are efficiently used by the salmon.

### Example 2:

The inclusion of the feed supplement obtained by the process according to the present invention has positive effects in the reduction of the fatty liver.

According to the histological analysis of liver samples (Fig. 5) and intestine (Fig. 6), it can be noted that there is a structural change in the tissues. Livers of the control group show a high accumulation of hepatic lipids compared with those fishes fed with the feed supplement (Table 3). Figure 5 shows a greater formation of micro and macro vesicles in the hepatic tissue in the fishes of the control group compared with those fed with a diet with 80% of inclusion of the feed supplement obtained by the process of the present invention. In the intestinal villi there are structural changes in the mucous folds, that shows a reduction of supranuclear vacuoles and the isolated presence of goblet cells in the group fed with diet 2 (20% of feed supplement), unlike the control group.

This information is supplemented with the results shown in Figures 7, 8 and 9 that show the frequencies of severity of liver lesions and the relative abundance of supranuclear vacuoles (SNV), goblet cells (GC) in the intestine, respectively, based on the score system of 1 to 5 for diets with 20%, 30%, 40% and 80% of inclusion of the supplement obtained by the process according to the present invention with respect to a control diet.

### Example 3:

The concentrations of fatty acids in the plasma and liver are shown in Table 4 and Table 5, where a deep effect in the liver's fat content is shown, where the fishes of the control group have much more liver lipids than the groups fed with the diets containing the supplement obtained by the process according to the present invention.

**Table 3: Hepatosomatic index (HSI, %), values for liver (score), TBARS in plasma and liver and circulating enzymes (mean±d.e., N=2 tanks per diet)**

| **Diet** | **1** | **2** | **3** | **4** | **5** | **Regr.** |
|---|---|---|---|---|---|---|
| Feed supplement obtained by the process of the present invention | 0 | 20 | 30 | 40 | 80 | |
| Inclusion of glycerol | 0 | 0 | 0 | 0 | 0 | p |
| Hepatosomatic index | 1.49 ± 0.03 | 1.57 ± 0.08 | 1.41 ± 0.01 | 1.49 ± 0.03 | 1.49 ± 0.07 | 0.72 |
| Liver score (1-5) | 3.3 ± 0.1 | 3.9 ± 0.1 | 4.3 ± 0.1 | 4.4 ± 0.0 | 4.4 ± 0.0 | 0.0095 |
| TBARS. µm MDA | | | | | | |
| TBARS liver | 12.9 ± 0.1 | 9.5 ± 1.4 | 10.1 ± 0.2 | 12.9 ± 0.3 | 12.0 ± 0.6 | 0.87 |
| TBARS plasma | 72 ± 5 | 98 ± 19 | 70 ± 6 | 100 ± 8 | 72 ± 8 | 0.89 |
| Plasmatic enzymes. U/L | | | | | | |
| Plasma ASAT | 571 ± 148 | 2156 ± 1093 | 38 ± 56 | 1083 ± 764 | 568 ± 256 | 0.80 |
| Plasma ALAT | 14 ± 2 | 33 ± 11 | 11 ±2 | 18 ± 10 | 11 ±5 | 0.73 |
| Plasma CK | 49949±12152 | 145131±97219 | 21376±10346 | 76600±60924 | 42985±28768 | 0.97 |

| | | | | | | |
|---|---|---|---|---|---|---|
| a Includes C15:0, C17:0, C20:0, C22:0, C24:0; b Includes C14:1 n-5, C16:1 n-9, C16:1 n-5, C17:1 n-7, C18:1 n-11, C20:1 n-11, C20:1 n-7, C22:1 n-9, C24:1 n-9; c Includes C16:2 n-6, C16:2 n-3, C18:3 n-6, C18:3 n-4, C20:4 n-3, C18:4 n-3, C20:3 n-3, C22:3 | | | | | | |

**Table 4: Total concentration of fatty acids (mg/g) and profile of fatty acids (% of total FA) in the plasma (mean±d.e. N=2)**

| **Diet** | **1** | **2** | **3** | **4** | **5** | **Regr.** |
|---|---|---|---|---|---|---|
| Feed supplement obtained by the process of the present invention | 0 | 20 | 30 | 40 | 80 | |
| Total AG. mg/kg | 12.56 ± 1.71 | 8.46 ± 0.66 | 12.85 ± 3.57 | 12.24±1.88 | 9.25±1.03 | 0.4 |
| % *de AG total* | | | | | | |
| C 14:0 | 1.19 ± 0.02 | 1.22±0.07 | 1.24±0.01 | 1.25±0.00 | 1.36±0.08 | 0.009 |
| C 16:0 | 15.32±0.44 | 17.46±2.03 | 16.43±0.08 | 16.58±0.38 | 17.44±0.28 | 0.12 |
| C 18:0 | 3.44±0.26 | 4.06±0.14 | 3.59±0.09 | 3.99±0.18 | 4.49±0.02 | 0.002 |
| **Sum saturated ^{a}** | 20.75±0.64 | 23.58±2.11 | 21.95±0.08 | 22.60±0.18 | 23.96±0.19 | 0.036 |
| C 16:1 n-7 | 1.92±0.08 | 1.79±0.05 | 1.75±0.08 | 1.86±0.06 | 2.34±0.08 | 0.005 |
| C 18:1 n-9 | 19.39±0.10 | 16.16±3.97 | 17.46±0.35 | 17.06±0.10 | 13.85±1.09 | 0.015 |
| C 18:1 n-7 | 1.49±0.04 | 1.43±0.19 | 1.18±0.34 | 1.55±0.01 | 1.59±0.08 | 0.46 |
| C 20:1 n-9 | 3.69±0.22 | 2.62±0.89 | 3.26±0.22 | 3.13±0.13 | 2.68±0.03 | 0.10 |
| C 22:1 n-7 | 1.03±0.01 | 0.88±0.03 | 0.74±0.09 | 0.82±0.01 | 0.66±0.02 | <0.001 |
| C22:1 n-11 | 1.98±0.06 | 1.33±0.55 | 1.50±0.05 | 1.42±0.05 | 0.81±0.05 | 0.0012 |
| **Sum monoenes ^{b}** | 31.43±0.22 | 26.42±6.08 | 28.11±0.16 | 27.93±0.19 | 23.90±1.55 | 0.028 |
| C 18:2 n-6 | 6.29±0.09 | 5.80±0.50 | 5.87±0.10 | 5.77±0.03 | 5.19±0.32 | 0.0012 |
| C 18:3 n-3 | 1.28±0.00 | 0.93±0.31 | 1.07±0.00 | 0.99±0.00 | 0.65±0.06 | 0.0013 |
| C 20:2 n-6 | 1.42±0.11 | 1.22±0.15 | 1.47±0.19 | 1.42±0.03 | 1.55±0.05 | 0.18 |
| C 20:3 n-6 | 1.93±0.05 | 1.74±0.08 | 1.28±0.08 | 1.39±0.02 | 1.06±0.03 | 0.004 |
| C 20:4 n-6 | 1.68±0.01 | 2.13±0.33 | 1.88±0.05 | 1.97±0.17 | 2.56±0.06 | 0.002 |
| C 20:5 n-3 | 7.66±0.30 | 8.20±0.82 | 9.16±0.03 | 8.80±0.26 | 10.35±0.45 | <0.001 |
| C 22:5 n-3 | 1.48±0.07 | 1.86±0.20 | 1.79±0.03 | 1.88±0.13 | 2.19±0.05 | <0.001 |
| C 22:6 n-3 | 23.70±1.03 | 25.23±2.70 | 25.18±0.21 | 24.93±0.09 | 25.76±0.91 | 0.18 |
| **Sum polyenes ^{c}** | 46.57±0.76 | 47.94±2.99 | 48.77±0.23 | 48.18±0.04 | 50.49±1.07 | 0.018 |
| Sum identified | 98.75±0.33 | 97.94±0.97 | 98.84±0.01 | 98.71±0.03 | 98.35±0.30 | |
| Sum EPA/DHA | 31.36±0.73 | 33.43±3.52 | 34.33±0.24 | 33.73±0.17 | 36.11±1.35 | 0.017 |
| Sum N-3 | 34.78±0.71 | 36.70±3.26 | 37.73±0.24 | 37.13±0.30 | 39.42±1.36 | 0.014 |
| Sum N-6 | 11.66±0.03 | 11.03±0.27 | 10.81±0.00 | 10.81±0.29 | 10.72±0.30 | 0.047 |

| | | | | | | |
|---|---|---|---|---|---|---|
| a Includes C15:0, C17:0, C20:0, C22:0, C24:0; b Includes C14:1 n-5, C16:1 n-9, C16:1 n-5, C17:1 n-7, C18:1 n-11, C20:1 n-11, C20:1 n-7, C22:1 n-9, C24:1 n-9; c Includes C16:2 n-6, C16:2 n-3, C18:3 n-6, C18:3 n-4, C20:4 n-3, C18:4 n-3, C20:3 n-3, C22:3 | | | | | | |

**Table 5: Total lipid (%), total fatty acid (mg/g) and fatty acid profile (% of total FA) in liver (mean±s.d., N=2)**

| **Diet** | **1** | **2** | **3** | **4** | **5** | **Regr.** |
|---|---|---|---|---|---|---|
| Feed supplement obtained by the process of the present invention | 0 | 20 | 30 | 40 | 80 | |
| % Fat (Folch) | 13.59±1.08 | 8.83±0.43 | 7.87±0.32 | 7.61±0.16 | 6.92±0.45 | 0.004 |
| Total AG. mg/g | 75.84±8.12 | 41.37±4.85 | 33.85±6.54 | 38.82±2.83 | 33.22±2.77 | 0.020 |
| % *of AG total* | | | | | | |
| C 14:0 | 1.55±0.00 | 1.61±0.02 | 1.48±0.02 | 1.56±0.03 | 1.54±0.09 | 0.96 |
| C 16:0 | 7.88±0.67 | 10.89±0.67 | 11.33±1.45 | 11.34±0.10 | 13.76±0.30 | 0.002 |
| C 18:0 | 4.53±0.15 | 5.74±0.03 | 5.42±0.17 | 5.93±0.22 | 6.91±0.07 | <0.001 |
| **Sum saturated ^{a}** | 14.52 ±0.77 | 18.76 ±0.59 | 18.65 ±1.60 | 19.29 ±0.11 | 22.75 ±0.56 | <0.001 |
| C 16:1 n-7 | 3.03±0.20 | 2.77±0.01 | 2.65±0.31 | 2.94±0.01 | 3.36±0.23 | 0.085 |
| C 18:1 n-9 | 41.65±0.68 | 33.96±0.97 | 29.11±3.46 | 31.20±0.62 | 25.13±0.74 | 0.002 |
| C 18:1 n-7 | 2.87±0.06 | 2.69±0.05 | 2.58±0.17 | 2.74±0.00 | 2.52±0.02 | 0.14 |
| C 20:1 n-9 | 6.32±0.56 | 4.68±0.34 | 4.11±0.60 | 4.54±0.00 | 3.06±0.04 | 0.0012 |
| C 22:1 n-7 | 0.95±0.01 | 0.84±0.02 | 0.92±0.02 | 0.77±0.01 | 0.68±0.04 | <0.001 |
| C22:1 n-11 | 1.54±0.07 | 1.14±0.04 | 0.95±0.17 | 1.02±0.04 | 0.53±0.04 | <0.001 |
| **Sum monoenes ^{b}** | 57.73±1.19 | 47.73±1.28 | 42.49±3.91 | 44.95±0.03 | 36.61 ±0.97 | <0.001 |
| C 18:2 n-6 | 8.71±0.29 | 7.76±0.15 | 7.70±0.26 | 7.76±0.06 | 6.59±0.08 | <0.001 |
| C 18:3 n-3 | 2.10±0.14 | 1.59±0.05 | 1.50±0.15 | 1.46±0.02 | 0.82±0.02 | <0.001 |
| C 20:2 n-6 | 1.94±0.17 | 1.76±0.13 | 1.76±0.12 | 1.94±0.01 | 1.58±0.08 | 0.15 |
| C 20:3 n-6 | 1.19±0.11 | 1.43±0.08 | 1.50±0.29 | 1.19±0.04 | 1.14±0.04 | 0.34 |

| **Diet** | **1** | **2** | **3** | **4** | **5** | **Regr.** |
|---|---|---|---|---|---|---|
| C 20:4 n-6 | 0.75±0.08 | 1.33±0.07 | 1.23±0.15 | 1.46±0.10 | 1.96±0.11 | <0.001 |
| C 20:5 n-3 | 1.85±0.17 | 2.93±0.22 | 4.00±0.42 | 3.58±0.04 | 5.09±0.19 | <0.001 |
| C 22:5 n-3 | 0.53±0.04 | 0.85±0.08 | 1.10±0.08 | 1.03±0.03 | 1.50±0.03 | <0.001 |
| C 22:6 n-3 | 8.13±0.64 | 13.40±0.64 | 17.03±2.40 | 14.84±0.33 | 19.36±1.01 | 0.0038 |
| **Sum polienes ^{c}** | 26.94±0.39 | 32.77±0.78 | 37.33±2.47 | 34.82±0.30 | 39.26±1.40 | 0.0046 |
| Sum identified | 99.18±0.02 | 99.25±0.09 | 98.47±0.16 | 99.05±0.15 | 98.62±0.13 | |
| Sum EPA/DHA | 9.98±0.81 | 16.32±0.86 | 21.03±2.82 | 18.42±0.29 | 24.45±1.20 | 0.0019 |
| Sum N-3 | 13.72±0.66 | 19.69±0.82 | 24.40±2.58 | 21.78±0.24 | 27.35±1.22 | 0.0022 |
| Sum N-6 | 13.08±0.25 | 12.79±0.13 | 12.59±0.20 | 12.77±0.06 | 11.76±0.19 | 0.0030 |

| | | | | | | |
|---|---|---|---|---|---|---|
| a Includes C15:0, C17:0,C20:0,C22:0, C24:0; b Includes C14:1 n-5, C16:1 n-9, C16:1 n-5, C17:1 n-7, C18:1 n-11; C20:1 n-11, C20:1 n-7, C22:1 n-9, C24:1 n-9; c Includes C16:2 n-6, C16:2 n-3, C18:3 n-6, C18:3 n-4, C18:4 n-3, C20:4 n-3, C20:3 n-3; C22:3, | | | | | | |

### Example 4:

1000 kilos of feed supplement were produced with a total content of EPA+DHA above 12%, as follows:
1.- 850 kilos of raw marine fatty acid are charged in the stainless steel, conicbottom reactor of the following characteristics:
EPA+DHA above 26%
Index of peroxides = 8 mEq of O2/kg,
Impurities = 1.9%
Humidity = 0.5%
Dioxins +PCBs= 19 ng/g
Arsenic= 0.8 ppm
Lead= 1.5 ppm acidios
Cadmium= 1.5 ppm
Mercury= 0.7 ppm

2.- 250 kilos of raw vegetal fatty acid are charged in the stainless steel, conic-bottom reactor of the following characteristics:
Linoleic acid C18:2 = 42%
Index of peroxides = 8.7 meq de O2/kg,
Impurities = 0.9%
Humidity = 0.8%
Dioxins +PCBs= 6.3 ng/g
Arsenic= 0.2 ppm
Lead= 0.5 ppm
Cadmium= 0.4 ppm
Mercury= 0.3 ppm

3.- Stirring at 840 rpm was applied to make the material homogeneous and the mixture of raw fatty acids started to heat through the steam coil until reaching a temperature of 63°C.
4.- Once the temperature was reached, 8.8 kilos of concentrated phosphoric acid and 55 kilos of water were added, and the mixture was stirred for 15 minutes.
5.- Then, 110 kilos of aqueous solution were added 2% of citric acid and stirred until reaching a temperature of 80°C.
6.- Decanting took place with stirring stopped for 30 minutes and the aqueous phase was separated, eliminating the gums through the reactor's bottom.
7.- The mixture was stirred at 850 rpm and 2 kilos of antifoaming agent were added of the polydimethylsiloxane type, increasing the temperature until 120°C.
8.- A slurry of activated carbon is prepared with 22 kilos of activated carbon (of vegetal origin, grain-size below mesh 325 and adsorption area of 1400 m²/g) with 220 kilos of the dry mixture of fatty acids charged in the reactor.
9.- This slurry of activated carbon is added to the reactor from its top under permanent stirring and keeping a temperature of 120°C.
10.- The product-activated carbon contact is kept for 3 hours.
11.- A filtering pre-layer was prepared in a filter press, Niagara or similar, with the addition of 20 kilos of Celatom-type 25-mesh diatom or similar and 5 kilos of cellulose of the Fibracel type or similar.
12.- The product was filtered by passing the content of the reactor in recirculation with the filter until reaching a content of impurities below 0.05%.
13.- The deodorizing equipment of the multistock type was charged, heating the product in heating cell until reaching 200°C with a 0.08 bar vacuum and passing to the deodorizing cell, where it was kept in contact with direct steam for 60 minutes.
14.- Once the deodorizing process ended, the product was transferred to a stabilization reactor, where BHT/BHA-type anti-oxidant was added in a proportion of 1000 ppm and it was kept under stirring at a nitrogen environment for 30 minutes.
15.- The product was transferred to a storage tank under a nitrogen environment.
16.- The final product was analyzed and the following results were obtained:

| | |
|---|---|
| Humidity | 1.0 % |
| Insoluble impurities | 0.2 % |
| Soaps | 6 ppm |
| Density (25°C) | 0.913 g/cc |
| Index of peroxides | 1.1meq O2/kg |
| Free acidity | 45.5 % |
| pH | 7.5 |
| Index of 2 Thiobarbituric acid | 20.1. mg mal/kg |
| Anisidine index | 12.3 |
| EPA+DHA | 14.3 % |
| Rancimat 80°C, 20tt/h | 43 horas |
| Dioxins +PCBs | 2.5 ng/g |
| Arsenic | 0.1 ppm |
| Lead | 0.5 ppm |
| Cadmium | 0.2 ppm |
| Mercury | 0.1 ppm |

## Claims

1. A process to prepare a feed supplement for aquatic organisms, **characterized in that** it comprises:
a. Charging and homogenizing the raw material which corresponds to raw fatty acids of marine and vegetable origin;
b. Heating the homogenized raw material at 60 to 70°C;
c. Degumming the mixture by adding 0.5-1.0% of phosphoric acid ;
d. Washing the mixture at 80°C at an aqueous solution of 2% citric acid under a proportion of 10% to the charge weight.;
e. Decanting;
f. Drying;
g. Cleaning of contaminants by heating the mixture at a temperature of 100 to 130°C and adding activated carbon ;
h. Filtering;
i. Deodorizing; and
j. Stabilizing and storing the feed supplement.

2. A process according to claim 1, **characterized in that** the homogenization stage of raw material is performed in a tank stirred at 800 to 900 rpm.

3. A process according to claim 1, **characterized in that** the degumming stage, the gums decanted are separated by decanting.

4. A process according to claim 1, **characterized in that** the activated carbon is added in a final concentration of 1 to 2%.

5. A process according to claim 1, **characterized in that** the activated carbon has an adsorption area of 1000 to 1500 m2/g.

6. A process according to claim 1, **characterized in that** the contact time of the activated carbon with the mixture is 3 hours or more.

## Patentansprüche

1. Verfahren zur Herstellung eines Futtermittelzusatzes für Wasserlebewesen, **dadurch gekennzeichnet, dass** es Folgendes umfasst:
a. Beschicken mit dem Ausgangsmaterial und Homogenisieren desselben, wobei dieses rohen Fettsäuren entspricht, die von Meeresorganismen und Pflanzen stammen;
b. Erwärmen des homogenisierten Ausgangsmaterial auf 60 bis 70 °C;
c. Entschleimen der Mischung durch Zugabe von 0,5 bis 1,0% an Phosphorsäure;
d. Waschen der Mischung bei 80°C, derart, dass eine 2 %ige wässrige Citronensäurelösung einen Anteil bildet, der weniger als 10 Gewichts% des Beschickungsguts ausmacht;
e. Dekantieren;
f. Trocknen;
g. Entfernen von Verunreinigungen, indem die Mischung auf eine Temperatur von 100 bis 130 °C erhitzt und Aktivkohle zugesetzt wird,
h. Filtern;
i. Desodorisieren; und
j. Stabilisieren und Lagern des Futtermittelzusatzes.

2. Verfahren gemäß Anspruch 1, **dadurch gekennzeichnet, dass** die Stufe des Homogenisierens von Ausgangsmaterial in einem Behälter durchgeführt wird, welcher mit 800 bis 900 U/min. gerührt wird.

3. Verfahren gemäß Anspruch 1, **dadurch gekennzeichnet, dass** in der Entschleimungsstufe die abgesetzten Schleimstoffe durch Dekantieren abgetrennt werden.

4. Verfahren gemäß Anspruch 1, **dadurch gekennzeichnet, dass** die Aktivkohle derart zugesetzt wird, dass ihre Endkonzentration 1 bis 2 % beträgt.

5. Verfahren gemäß Anspruch 1, **dadurch gekennzeichnet, dass** die Aktivkohle eine Adsorptionsfläche von 1000 bis 1500 m²/g aufweist.

6. Verfahren gemäß Anspruch 1, **dadurch gekennzeichnet, dass** die Kontaktdauer der Aktivkohle mit der Mischung mindestens 3 Stunden beträgt.

## Revendications

1. Procédé pour préparer un complément alimentaire pour des organismes aquatiques, **caractérisé en ce qu'**il comprend les étapes :
a. charger et homogénéiser la matière première qui correspond à des acides gras bruts d'origines marine et végétale ;
b. chauffer la matière première homogénéisée de 60 à 70°C ;
c. dégommer le mélange par ajout de 0,5 à 1,0 % d'acide phosphorique ;
d. laver le mélange à 80°C avec une solution aqueuse d'acide citrique à 2 % à raison de 10 % du poids de la charge ;
e. décanter ;
f. sécher ;
g. nettoyer les contaminants en chauffant le mélange à une température de 100 à 130°C et ajouter du charbon actif ;
h. filtrer ;
i. désodoriser ; et
j. stabiliser et stocker le complément alimentaire.

2. Procédé selon la revendication 1, **caractérisé en ce que** l'étape d'homogénéisation de la matière première est effectuée dans un réservoir agité à une vitesse de 800 à 900 tr/min.

3. Procédé selon la revendication 1, **caractérisé en ce qu'**à l'étape de dégommage, les gommes décantées sont séparées par décantation.

4. Procédé selon la revendication 1, **caractérisé en ce que** le charbon actif est ajouté à une concentration finale de 1 à 2 %.

5. Procédé selon la revendication 1, **caractérisé en ce que** le charbon actif présente une surface d'adsorption de 1000 à 1500 m2/g.

6. Procédé selon la revendication 1, **caractérisé en ce que** le temps de contact du charbon actif avec le mélange est de 3 heures ou plus.
